(19) Europäisches Patentamt
European Patent Office
Office européen des brevets

(11) **EP 3 525 414 A1**

(12) **EUROPÄISCHE PATENTANMELDUNG**

(43) Veröffentlichungstag:
**14.08.2019   Patentblatt 2019/33**

(51) Int Cl.:
***H04L 29/06*** *(2006.01)*

(21) Anmeldenummer: **18156287.7**

(22) Anmeldetag: **12.02.2018**

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO RS SE SI SK SM TR**<br>Benannte Erstreckungsstaaten:<br>**BA ME**<br>Benannte Validierungsstaaten:<br>**MA MD TN** | (71) Anmelder: **Siemens Aktiengesellschaft**<br>**80333 München (DE)**<br><br>(72) Erfinder:<br>• **Falk, Rainer**<br>  **85586 Poing (DE)**<br>• **Fries, Steffen**<br>  **85598 Baldham (DE)** |

(54) **VERFAHREN ZUR VERSCHLÜSSELTEN ÜBERTRAGUNG VON DATEN AUF EINER KRYPTOGRAPHISCH GESCHÜTZTEN, UNVERSCHLÜSSELTEN KOMMUNIKATIONSVERBINDUNG**

(57)      Verfahren zur verschlüsselten Übertragung von Daten auf einer kryptographisch geschützten, unverschlüsselten Kommunikationsverbindung (104) zwischen einem ersten Gerät (101) und einem zweiten Gerät (102), mit den Schritten:
- Empfangen eines öffentlichen Schlüssels (pubkS) des zweiten Geräts (102) im ersten Gerät (101) beim Aufbau (M0) der Kommunikationsverbindung (104), auf der Daten unverschlüsselt übertragen werden,
- Verschlüsseln mindestens einer Teilmenge der zu übertragenden Daten mit Hilfe des öffentlichen Schlüssels (pubkS) des zweiten Geräts (102) und
- Senden (M4) der verschlüsselten Teilmenge von Daten an das zweite Gerät (102).

FIG 2A

EP 3 525 414 A1

**Beschreibung**

Die Erfindung betrifft ein Verfahren sowie ein erstes und ein zweites Gerät sowie ein Computerprogrammprodukt zur verschlüsselten Übertragung von Daten auf einer kryptographisch geschützten, jedoch unverschlüsselten Kommunikationsverbindung zwischen einem ersten Gerät und einem zweiten Gerät.

Über Kommunikationsnetze, insbesondere Datennetzwerke in industriellen Anlagen und Automatisierungssystemen werden oftmals sensible Steuerungs- und Überwachungsdaten übertragen. Um diese Daten bei der Übertragung zu schützen wird beispielsweise ein Sicherheitsprotokoll, wie beispielsweise eine sichere Medienzugriffssteuerung MACsec oder ein sicheres Internet Protokoll IPsec/IKEv2 oder insbesondere ein Transportschicht-Sicherheitsprotokoll TLS oder auch ein Datagram Transportschicht-Sicherheitsprotokoll DTLS verwendet. Dabei wird die Authentizität der Kommunikationspartner überprüft und, abhängig von der Konfiguration des Protokolls, eine Manipulation und ein Abhören der Kommunikationsverbindung verhindert. Dazu wird meist beim Verbindungsaufbau ein kryptographisches Schlüsselmaterial, insbesondere ein Sitzungsschlüssel, und eine Chiffriermethode, auch als Cipher Suite bezeichnet, ausgehandelt, mit denen die übermittelten Daten integritätsgeschützt und verschlüsselt werden.

Andererseits besteht jedoch auch die Anforderung, das Kommunikationsnetz zu überwachen, um beispielsweise eine Fehlfunktion oder auch eine fehlerhafte Administration diagnostizieren zu können. Auch besteht in manchen Anwendungen die Anforderung, Steuerungskommunikation in einem "Black Box Recorder" bzw. "Juridical Recorder" aufzuzeichnen, um im Falle eines Unfalls den Schadenshergang aufklären zu können. Auch kann die Anforderung bestehen, den Ablauf eines Produktionsvorgangs zu dokumentieren. Somit besteht insbesondere in industriellen Automatisierungs- und Steuerungsanlagen ein Bedarf, Kommunikationsverbindungen zwar kryptographisch bezüglich der Authentizität der kommunizierenden Geräte und die Integrität der Datenübertragung zu schützen, jedoch auf eine komplette Verschlüsselung der Daten zu verzichten. Somit kann zwar die Kommunikation überwacht werden, sie ist aber nicht mehr vor einem Abhören durch Dritte geschützt.

Es ist bekannt, so genannte Integrity Only Cipher Suites, beispielsweise in Verbindung mit einem Transportschicht-Sicherheitsprotokoll TLS Version 1.2 zu verwenden. Diese Integrity Only Cipher Suites schützen nur die Integrität der übertragenen Daten und stellen die Authentizität der Kommunikationspartner durch Austausch von digitalen Zertifikaten sicher. Ebenfalls ist bekannt, in Verbindung mit dem sicheren Internet Protokoll IPsec/IKEv2 im Modus "Authentication Header" nur einen Schutz der Integrität der übertragenen Informationen zu realisieren.

Trotz der Anforderung, Daten in kryptographisch geschützten Kommunikationsverbindungen überwachen zu können, besteht die Anforderung, dennoch einzelne Daten oder Teilmengen von Daten vertraulichkeitsgeschützt, also abhörsicher, übertragen zu können.

Es ist die Aufgabe der vorliegenden Erfindung, in kryptographisch geschützten Kommunikationsverbindungen, in denen jedoch die Daten unverschlüsselt übertragen werden, mit möglichst geringem Zusatzaufwand und in einfacher Weise zumindest Teilmengen an Daten verschlüsselt übertragen zu können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur verschlüsselten Übertragung von Daten auf einer kryptographisch geschützten, unverschlüsselten Kommunikationsverbindung zwischen einem ersten Gerät und einem zweiten Gerät, mit den folgenden Verfahrensschritten:

Empfangen eines öffentlichen Schlüssels des zweiten Gerätes im ersten Gerät beim Aufbau der kryptographisch geschützten Kommunikationsverbindung, auf der Daten unverschlüsselt übertragen werden. Verschlüsseln mindestens einer Teilmenge der zu übertragenden Daten mit Hilfe des öffentlichen Schlüssels des zweiten Gerätes und Senden der unverschlüsselten Teilmenge von Daten an das zweite Gerät.

Dies hat den Vorteil, dass der öffentliche Schlüssel bereits zur Authentifizierung der Kommunikationspartner einer Kommunikationsverbindung, hier also dem ersten und dem zweiten Gerät, beim Aufbau einer kryptographisch geschützten Kommunikationsverbindung übertragen wird. Somit kann dieser bereits im Verbindungsaufbau verwendete öffentliche Schlüssel zur Verschlüsselung der Teilmenge von Daten verwendet werden. Es muss kein neuer Schlüssel erzeugt werden und es ist keine zusätzliche Schlüsselverteilung für diesen Verschlüsselungsschlüssel notwendig. Vorzugsweise erfolgt die Übertragung der verschlüsselten Teilmenge von Daten über die kryptographisch geschützte Kommunikationsverbindung. D.h. dass die Teilmenge von Daten mit den im Verbindungsaufbau verwendeten öffentlichen Schlüssel verschlüsselt werden und die verschlüsselten Teilmenge von Daten gemeinsam mit unterschlüsselten Daten unter Verwendung des ausgehandelten Sitzungsschlüssels integritätsgeschützt übertragen werden.

In einer vorteilhaften Ausführungsform wird der öffentliche Schlüssel als Bestandteil eines Zertifikats des zweiten Gerätes im ersten Gerät empfangen. Insbesondere wird als digitales Zertifikat das digitale Zertifikat verwendet, das zur Authentifizierung des zweiten Gerätes beim ersten Gerät im Kontext der gesicherten Kommunikationsverbindung verwendet wurde.

Dies hat den Vorteil, dass keine zusätzliche Zertifikatsverteilung, Zertifikatsverwaltung und auch keine zusätzliche Zertifikatsprüfung oder ähnliches notwendig sind. Das digitale Zertifikat wird üblicherweise bereits bei der Authentifizierung geprüft. Bei einem Verbindungsaufbau gemäß dem Transportschicht-Sicherheitsprotokoll TLS wird beispielsweise zur Authentifizierung des TLS-Servers, der hier dem zweiten Gerät entspricht, bei einem TLS-Client, der hier dem ersten Gerät entspricht, bereits die Gültigkeit des vom zweiten Gerät übermittelten Zertifikats überprüft. Lediglich ein als gültig überprüftes Zertifikat wird akzeptiert. Wird das Zertifikat als ungültig erkannt, wird bevorzugt der Verbindungsaufbau abgebrochen. Somit ist sichergestellt, dass der empfangene öffentliche Schlüssel gültig und dem zweiten Gerät zugeordnet ist. Damit ist das Verfahren effizient und besonders für batteriebetriebene oder aus anderen Gründen ressourcenbeschränkte Geräte, wie beispielsweise Internet of Things-Geräte, anwendbar.

In einer vorteilhaften Ausführungsform werden der öffentliche Schlüssel oder das digitale Zertifikat des öffentlichen Schlüssels im ersten Gerät gespeichert.

Dies hat den Vorteil, dass der öffentliche Schlüssel zur Verschlüsselung auch dann vorliegt, wenn dieser erst in einem zeitlichen Abstand nach dem Verbindungsaufbau und insbesondere der Authentifizierung des zweiten Gerätes zur Verschlüsselung verwendet wird. Dadurch ist keine erneute Anforderung des öffentlichen Zertifikats vom ersten Gerät beim zweiten Gerät und kein nochmaliges Senden des öffentlichen Schlüssels vom zweiten Gerät an das erste Gerät notwendig. Dies ist einerseits ressourcensparend und ermöglicht eine nahezu verzögerungsfreie Übertragung auch der verschlüsselten Teildatenmenge.

In einer vorteilhaften Ausführungsform wird eine eindeutige Kennung, insbesondere ein Hashwert des öffentlichen Schlüssels oder des digitalen Zertifikats im ersten Gerät gespeichert.

Dies reduziert den Speicherbedarf beziehungsweise ein einfaches Auffinden von zugehörigen öffentlichen Schlüssels oder digitalen Zertifikats im Gerät. Damit können Sicherheitsvorgaben zur Nutzung eines bestimmten Schlüssels für die Verschlüsselung von Daten zur Übertragung an das zweite Gerät unterstützt werden. Außerdem kann durch unautorisiertes Auslesen des Hashwertes nicht auf den tatsächlichen öffentlichen Schlüssel oder das Zertifikat geschlossen werden.

In einer vorteilhaften Ausführungsform wird die geschützte Verbindung gemäß einem kryptographischen Sicherheitsprotokoll, insbesondere einem Transportschicht-Sicherheitsprotokoll TLS oder einem sicheren Internetprotokoll IPsec/IKEv2 aufgebaut.

Dies hat den Vorteil, dass das Verfahren mit weit verbreiteten Sicherheitsprotokollen eingesetzt werden kann und somit von verschiedenen Anwendungsprogrammen und in unterschiedlichen Datennetzwerken einsetzbar ist. Beispielsweise können einzelne Datensätze bzw. Felder eines einheitlichen Architekturprotokolls der OPC Foundation OPC UA zusätzlich verschlüsselt werden.

In einer vorteilhaften Ausführungsform ist der öffentliche Schlüssel eine erste Schlüsselkomponente eines kryptographischen Verfahrens mittels elliptischer Kurven und wird mit einer zweiten Schlüsselkomponente eines kryptographischen Verfahrens mittels elliptischer Kurven, die vom ersten Gerät bereitgestellt wird, zur Berechnung eines Verschlüsselungsschlüssels verwendet.

Dies ermöglicht es neben privaten Schüsseln in einem asymmetrischen kryptographischen Verfahren, wie beispielsweise gemäß Rivest, Shamir und Adleman, auch als RSA Kryptoverfahren bezeichnet, öffentliche Schlüssel gemäß einem digitalen Signaturalgorithmus-Verfahren mit elliptischen Kurven zu verwenden. Dabei wird der öffentliche Schlüssel, der gemäß dem DSA oder ECDSA ausgestaltet ist, zur Berechnung eines Verschlüsselungsschlüssels zu verwenden. Der Verschlüsselungsschlüssel wird mittels einer zweiten Schlüsselkomponente, die vom ersten Gerät gemäß dem DSA/ECDSA-Verfahren bestimmt wird und dem vom zweiten Gerät empfangenen öffentlichen Schlüssel als erste Schlüsselkomponente berechnet. Diese Ansatz unter Nutzung von ECDSA entspricht dem Diffie Hellman Verfahren über elliptische Kurven (ECDH) und wird durch die Struktur der ECDSA Parameter ermöglicht. Diese Kombination ermöglicht es das ECDSA Schlüsselmaterial, das nicht direkt zur Verschlüsselung verwendet werden kann, im Kontext eines ECDH Verfahrens zur Aushandlung eines Verschlüsselungsschlüssels zu nutzen. Somit ist das beschriebene Verfahren auch für das ECDSA-Verfahren anwendbar und deckt somit ein weiteres häufig genutztes Verfahren zum Bereitstellen von kryptographisch geschützten Kommunikationsverbindungen ab.

In einer vorteilhaften Ausführungsform werden die verschlüsselten Daten zusammen mit der zweiten Schlüsselkomponente an das zweite Gerät gesendet.

Dies ermöglicht es dem zweiten Gerät ohne zusätzlichen Nachrichtenaustausch mit dem ersten Gerät den Verschlüsselungsschlüssel selbst zu erstellen und somit die verschlüsselten Daten zu entschlüsseln.

In einer vorteilhaften Ausführungsform wird die mindestens eine Teilmenge der verschlüsselt zu übertragenden Daten in einer Datenstruktur übertragen, die gemäß einer kryptographischen Nachrichtensyntax CMS, einem sicheren multifunktionalen Internetmail-Erweiterungsstandard S/MIME oder einem Java Script Object Notation Web-Verschlüsselungsformat JWE oder einem erweiterbaren Auszeichnungssprachformat XML strukturiert ist.

Dies hat den Vorteil, dass bereits bekannte Datenstrukturen und somit einfach verfügbare und implementierbare Standards zur Erkennung und Auswertung der Datenstruktur verwendet werden können.

In einer vorteilhaften Ausführungsform weist die Datenstruktur eine Schlüsselkennung auf, die den Inhalt der Datenstruktur als verschlüsselte Daten identifiziert.

In einer vorteilhaften Weiterbildung enthält die Schlüsselkennung den öffentlichen Schlüssel oder mindestens einen Parameter des Zertifikats, insbesondere eine Seriennummer und eine Kennung der Ausstellungsstelle des Zertifikats oder eine eindeutige Kennung, insbesondere ein Hashwert, des öffentlichen Schlüssels oder des mindestens einen Parameters des Zertifikats.

Dies hat den Vorteil, dass durch die Kennung der Datenstruktur bereits im zweiten Gerät ein Hinweis auf den zu verwendenden Entschlüsselungsschlüssel gegeben wird. Die Verwendung eines Hashwertes hat den Vorteil, dass dadurch die Schlüsselkennung eindeutig identifizierbar ist, aber weniger Übertragungskapazität benötigt. Außerdem kann ein unerlaubter Dritter über die Schlüsselkennung der Datenstruktur keine Rückschlüsse auf den verwendeten öffentlichen Schlüssel oder das verwendete Zertifikat ziehen.

Gemäß einem zweiten Aspekt betrifft die Erfindung ein erstes Gerät zur verschlüsselten Übertragung von Daten auf einer kryptographisch geschützten, unverschlüsselten Kommunikationsverbindung zwischen dem ersten Gerät und einen zweiten Gerät. Das erste Gerät umfasst eine Empfangseinheit, die derart ausgebildet ist, einen öffentlichen Schlüssel des zweiten Gerätes beim Aufbau der Kommunikationsverbindung, auf der Daten unverschlüsselt übertragen werden, zu empfangen, eine Verschlüsselungseinheit, die derart ausgebildet ist, mindestens eine Teilmenge der zu übertragenden Daten mit Hilfe des öffentlichen Schlüssels des zweiten Geräts zu verschlüsseln und eine Sendeeinheit, die derart ausgebildet ist, die verschlüsselte Teilmenge von Daten an das zweite Gerät zu senden.

Dies hat den Vorteil, dass ein solches Gerät über kryptographische Verfahren integritätsgeschützt und authentifiziert arbeiten kann und dennoch besonders schützenswerte Daten verschlüsselt senden kann.

Gemäß einem dritten Aspekt betrifft die Erfindung ein zweites Gerät zur verschlüsselten Übertragung von Daten über eine kryptographisch geschützte, unverschlüsselte Kommunikationsverbindung zwischen einem ersten Gerät und dem zweiten Gerät, umfassend eine Sendeeinheit, die derart ausgebildet ist, einen öffentlichen Schlüssel des zweiten Gerätes beim Aufbau der Kommunikationsverbindung, auf der Daten unverschlüsselt übertragen werden, an ein erstes Gerät zu senden, eine Empfangseinheit, die derart ausgebildet ist, eine verschlüsselte Teilmenge von Daten vom ersten Gerät zu empfangen und eine Entschlüsselungseinheit, die derart ausgebildet ist, die mindestens eine Teilmenge der empfangenen Daten zu entschlüsseln.

Ein solches zweites Gerät ist insbesondere vorteilhaft, wenn besonders vertrauliche Daten verschlüsselt und somit für Dritte nicht lesbar übertragen werden sollen.

Die im ersten und/oder zweiten Gerät ausgebildeten Einheiten können sowohl als Hardware- oder auch als Softwarekomponenten ausgebildet sein. Die Einheiten werden bevorzugt durch einen oder mehrere Mikroprozessoren ausgebildet. Das erste und zweite Gerät kann als Vorrichtung oder als Teil einer Vorrichtung, zum Beispiel als Computer oder als Mikroprozessor oder als Feldgerät in einer Automatisierungsanlage ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem vierten Aspekt betrifft die Erfindung ein Computerprogrammprodukt, das direkt in einen Speicher eines digitalen Computers ladbar ist, umfassend Programmcodeteile, die dazu geeignet sind, die Schritte des beschriebenen Verfahrens durchzuführen.

Ein Computerprogrammprodukt, wie zum Beispiel ein Computerprogrammmittel, kann beispielsweise als Speichermedium, wie beispielsweise eine Speicherkarte, ein USB-Stick, ein CD-ROM, eine DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogrammmittel erfolgen.

Ausführungsbeispiele des erfindungsgemäßen Verfahrens und der erfindungsgemäße Geräte sind in den Zeichnungen beispielhaft dargestellt und werden anhand der nachfolgenden Beschreibung näher erläutert. Es zeigen:

Figur 1      ein Anwendungsbeispiel des erfindungsgemäßen Verfahrens mit einem Ausführungsbeispiel eines ersten und zweiten erfindungsgemäßen Geräts in schematischer Darstellung;

Figur 2A      ein erstes Ausführungsbeispiel des erfindungsgemäßen Verfahrens in Form eines Nachrichtenaustausch-Diagramms in schematischer Darstellung;

Figur 2B      ein zweites Ausführungsbeispiel des erfindungsgemäßen Verfahrens in Form eines Nachrichtenaustausch-Diagramms in schematischer Darstellung;

Figur 3      ein erste Ausführungsbeispiel einer Datenstruktur zur Übertragung von verschlüsselten Daten in Block-darstellung;

Figur 4      ein zweites Ausführungsbeispiel einer erfindungsgemäßen Datenstruktur bei Verwendung eines kryptographischen Verfahrens mittels elliptischer Kurven;

Figur 5      ein Ausführungsbeispiel eines erfindungsgemäßen ersten Gerätes in Blockdarstellung; und

Figur 6       ein Ausführungsbeispiel eines erfindungsgemäßen zweiten Gerätes in Blockdarstellung.

Einander entsprechende Teile sind in allen Figuren mit den gleichen Bezugszeichen versehen.

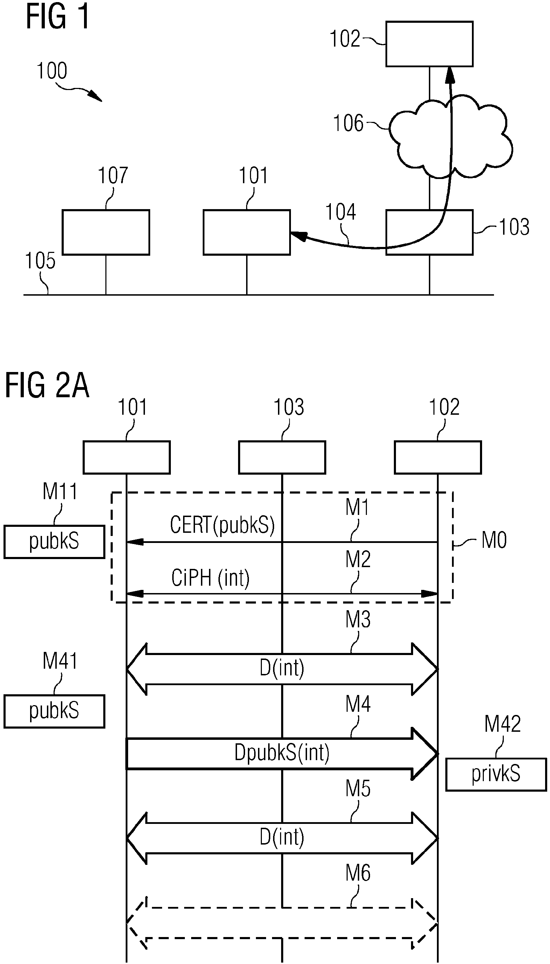

Figur 1 zeigt ein Kommunikationsszenario 100, das beispielsweise in einer industriellen Anlage, wie einer Automatisierungs- oder Sicherungsanlage, vorliegt. Darin sind unterschiedliche Komponenten, beispielsweise Geräte, insbesondere Feldgeräte 101, 102, 107 und eine Überwachungseinrichtung 103 über ein Datennetzwerk 105 oder auch über ein Kommunikationsnetzwerk 106 verbunden. Über die Netzwerke 105, 106 werden beispielsweise sensible Steuer- und Überwachungsdaten übertragen. Um diese bei der Übertragung zu schützen, kann ein Sicherheitsprotokoll, wie insbesondere das Transportschicht-Sicherheitsprotokoll TLS oder auch ein IPsec/IKEv2 oder MACsec Protokoll verwendet werden. Verbindungen, die gemäß einem solchen Sicherheitsprotokoll aufgebaut sind, verwenden kryptographische Verfahren mit einem öffentlichen Schlüssel zur Authentifizierung der Kommunikationspartner während des Verbindungsaufbaus. Anschließend wird dann ein so genannter Sitzungsschlüssel zwischen den Kommunikationspartnern ausgehandelt. Dieser wird im weiteren Verlauf zur Integritätsprüfung, beispielsweise über eine Prüfsumme oder digitale Signatur der übertragenen Nutzdaten, und zur Verschlüsselung der Nutzdaten verwendet.

Um beispielsweise eine Fehlfunktion innerhalb des Kommunikationsszenarios, also beispielsweise der industriellen Anlage diagnostizieren zu können, oder auch um Steuerungskommunikation aufzeichnen zu können, wird auf eine Verschlüsselung der Kommunikationsverbindung verzichtet. Im Kommunikationsszenario 100 wird beispielsweise zwischen einem ersten Gerät 101 und einem zweiten Gerät 102 eine kryptographisch geschützte, aber unverschlüsselte, Kommunikationsverbindung 104 zu einem zweiten Gerät 102 beispielsweise gemäß einem Transportschicht-Sicherheitsprotokoll TLS aufgebaut. Die Kommunikationsverbindung 104 wird dabei über die Überwachungseinrichtung 103 geführt, in der die Daten beispielsweise aufgezeichnet und zur weiteren Diagnose gespeichert oder weitergeleitet werden.

Beispielsweise kann bei Verwendung eines TLS Version 1.2-Sicherheitsprotokolls eine Integrity-Only Chiffriermethode (Cipher Suite) verwendet werden. Diese schützt nur die Integrität der übertragenen Daten und ermöglicht die Überprüfung der Authentizität der Kommunikationspartner. Es wird jedoch nicht die Vertraulichkeit der übertragenen Daten geschützt, das heißt die Nutzdaten werden im Klartext übertragen. Dadurch kann hier die kryptographisch geschützte Kommunikation überwacht werden. Die Kommunikationsverbindung 104 ist nun aber gänzlich unverschlüsselt, so dass sie von beliebigen Dritten abhörbar ist.

Um besonders sensible Daten dennoch verschlüsselt übertragen zu können, wird die Kommunikationsverbindung 104 wie nachfolgend in Figur 2A detailliert beschrieben aufgebaut.

Zwischen dem ersten Gerät 101 und dem zweiten Gerät 102 wird beim Verbindungsaufbau, beispielsweise über das IPsec/IKEv2 Protokoll oder wie im Weiteren näher beschrieben, über das Transportschicht-Sicherheitsprotokoll TLS aufgebaut. Das erste Gerät 101 beziehungsweise das zweite Gerät 102 bilden die Endpunkte, auch Peers genannt, der kryptographisch geschützten Verbindung 104. Das erste Gerät 101, das die Verbindung 104 initiiert, wird dabei auch als TLS-Client, der Kommunikationspartner, hier das zweite Gerät 102, als TLS-Server bezeichnet. Die Überwachungseinrichtung 103 ist dabei nicht in die Authentifizierung oder eine Schlüsselaushandlung involviert.

Während des Verbindungsaufbaus M0 sendet das zweite Gerät zu seiner Authentifizierung seinen öffentlichen Schlüssel pubkS als Teil eines digitalen Zertifikats CERT an das erste Gerät 101, siehe M0. Das erste Gerät 101 überprüft anhand des digitalen Zertifikats und dem öffentlichen Schlüssels pubkS die Vertrauenswürdigkeit und Identität des zweiten Gerätes 102 und speichert nun den öffentlichen Schlüssel pubkS des zweiten Gerätes dauerhaft, mindestens aber bis zum Ende beziehungsweise Abbau der Verbindung zur späteren Nutzung ab, siehe M11. Alternativ oder auch zusätzlich zum öffentlichen Schlüssel pubkS kann das erste Gerät 101 das Zertifikat CERT, das den öffentlichen Schlüssel pubkS enthält, abspeichern. Es ist des Weiteren möglich, statt des öffentlichen Schlüssels und/oder des Zertifikats auch eine eindeutige Kennung, beispielsweise einen Hashwert des öffentlichen Schlüssels pubkS und/oder des digitalen Zertifikats CERT abzuspeichern. Dies setzt für die spätere Nutzung des öffentlichen Schlüssels voraus, dass das Zertifikat zu einem früheren Zeitpunkt schon auf dem ersten Gerät abgespeichert wurde.

Nach einer erfolgreichen Authentifizierung des zweiten Gerätes 102 wird zwischen dem ersten Gerät 101 und dem zweiten Gerät 102 die zu verwendende Chiffriermethode CiPH und ein Sitzungsschlüssel zwischen dem ersten und zweiten Gerät 101, 102 im Schritt M2 ausgehandelt. Dieser ausgehandelte Sitzungsschlüssel wird anschließend zum kryptographischen Schutz der Daten verwendet. Im dargestellten Fall wird als Chiffriermethode eine Integrity- Only-Cipher Suite beispielsweise TLS_RSA_with_NULL-SHA, vereinbart, so dass im nachfolgenden Datenaustausch über die aufgebaute Kommunikationsverbindung lediglich die Integrität der Daten beispielsweise durch eine kryptographische Prüfsumme, beispielsweise einem Nachrichtenauthentisierungscode MAC abgesichert. Die Daten selbst bleiben unverschlüsselt. Im Lauf der weiteren Verbindungsphase M3 werden nun die Daten D unverschlüsselt zwischen dem ersten Gerät 101 und dem zweiten Gerät 102 übertragen.

Wenn das erste Gerät 101 sensitive Daten über die nur integritätsgeschützte, beispielsweise TLS-Kommunikationsverbindung 104 schicken möchte, siehe Verbindungsphase M4, nutzt eine Applikation des ersten Gerätes 101, das gespeicherte Zertifikat und verschlüsselt die Daten mit dem öffentlichen Schlüssel pubkS des zweiten Gerätes 102, siehe M41. Die Applikation im ersten Gerät 101 sowie auch im zweiten Gerät 102 sind dabei die eigentlichen Anwender der über die Kommunikationsverbindung 104 übertragenen Daten D. Die nun verschlüsselt übertragene Teilmenge von Daten kann eine beliebige Datenmenge umfassen und über eine beliebig lange Dauer während der vorhandenen Kommunikationsverbindung 104 andauern. Wird ein Verschlüsselungsverfahren nach Rivest, Shamir und Adleman, auch als RSA-Kryptoverfahren bekannt, verwendet entschlüsselt das zweite Gerät 102 die empfangenen verschlüsselten Daten DpubkS mit einem zum öffentlichen Schlüssel pubkS gehörenden privaten Schlüssel privkS, siehe M42. Dieser Schlüssel ist lediglich im zweiten Gerät 102 bekannt.

Gibt die Applikation die Übertragung der Daten in unverschlüsselter Form wieder frei, werden die Daten im weiteren Verbindungsabschnitt M5 wieder unverschlüsselt über die ansonsten kryptographisch geschützte Kommunikationsverbindung 104 übertragen. Die Kommunikationsverbindung 104 endet mit dem Verbindungsabbau M6.

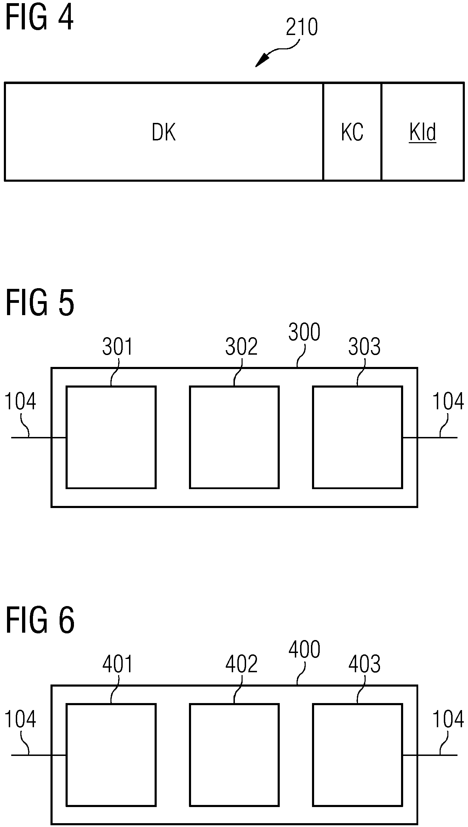

Die während der Verbindungsphase M4 verschlüsselt übertragenen Daten werden in mindestens einer Datenstruktur 200, wie in Figur 4 dargestellt, übertragen. Die Datenstruktur 200 kann dabei beispielsweise entsprechend einer kryptographischen Nachrichtensyntax CMS, einer sicheren multifunktionalen Internet-Mailerweiterungsstandard S/MIME oder einem JAVA Script Object Notification Web-Verschlüsselungsforma JWE oder auch einem erweiterbaren Auszeichnungssprachformat XML strukturiert sein. Eine so strukturierte Datenstruktur 200 umfasst eine Schlüsselkennung KId, die den Inhalt der Datenstruktur als verschlüsselte Daten identifiziert und im zweiten Gerät 102 zur Identifizierung des zur Verschlüsselung verwendeten Schlüssels ermöglicht. Die Datenstruktur enthält im Weiteren die mit dem öffentlichen Schlüssel pubkS verschlüsselten Daten DpubkS.

Eine solche Datenstruktur und insbesondere die Schlüsselkennung KId genügt bei Verwendung eines Verschlüsselungsverfahren nach Rivest, Shamir und Adleman als RSA-Verschlüsselung bezeichnet, aus, um dem zweiten Gerät den zugehörigen privaten Schlüssel privkS zu identifizieren und damit die verschlüsselten Daten DpubkS zu entschlüsseln.

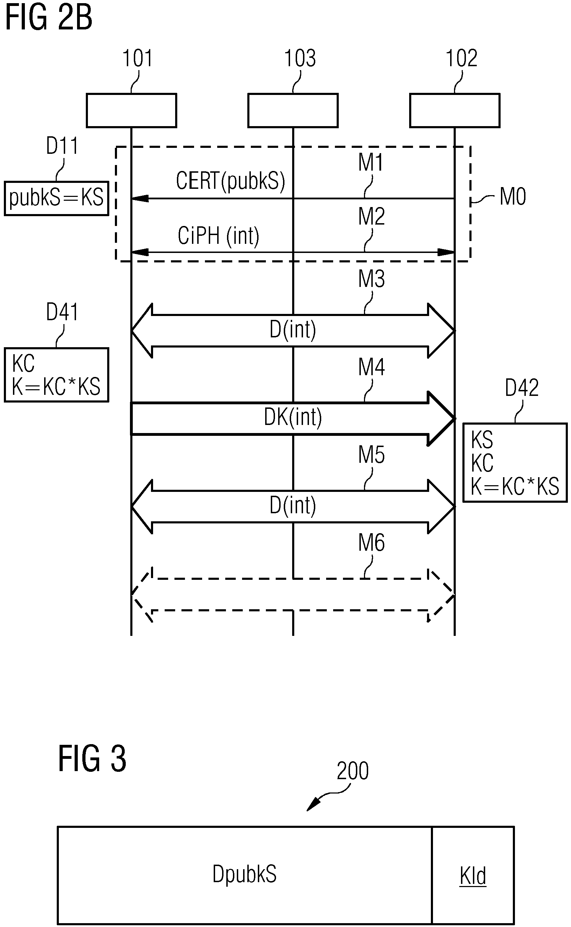

Figur 2B beschreibt eine Kommunikationsverbindung, die mit einem kryptographischen Verfahrens mittels elliptischer Kurven, auch als ECDSA-Verfahren bezeichnet, geschützt wird.

Die verwendeten Referenzzeichen bezeichnen soweit nicht anders beschrieben die gleichen Verfahrensschritte wie in Figur 2A.

Wird vom zweiten Gerät 101 kein RSA-Zertifikat, sondern ein ECDSA-Zertifikat genutzt, so kann die Verschlüsselung nicht direkt mit dem öffentlichen Schlüssel pubS durchgeführt werden. In diesem Fall ist der öffentlichen Schlüssel pubS des zweiten Gerätes ein statischer Diffie-Hellman-Parameter des zweiten Geräts 102. Dieser wird darstellt, als eine erste Schlüsselkomponente KS bei der Authentifizierung M0 an das erste Gerät 101 übermittelt. Im ersten Gerät wird der öffentliche Schlüssel pubS bzw. die erste Schlüsselkomponente KS abgespeichert, siehe D11.

Die erste Schlüsselkomponente ergibt sich dabei aus

$$KS = G^Y \bmod n \ .$$

Das erste Gerät 101 berechnet selbst eine zweite Schlüsselkomponente KC

$$KC = G^X \bmod n \ ,$$

wobei G eine Primitivwurzel und n eine natürliche Zahl sind, und sowohl dem ersten Gerät 101 als auch dem zweiten Gerät 102 bekannt sind. x beziehungsweise y sind Zufallszahlen, die jeweils nur im ersten Gerät 101, beziehungsweise im zweiten Gerät 102 bekannt sind und dort geheim zu halten werden.

Die zu verschlüsselnden Daten werden nun mit einem Verschlüsselungsschlüssel K, der aus dem Produkt der ersten Schlüsselkomponente KS und der zweiten Schlüsselkomponente KC, berechnet wird, siehe D41 bzw. D42, verschlüsselt und bilden verschlüsselte Daten DK.

Figur 4 zeigt eine Datenstruktur 210 zur Übertragung der nach dem ECDSA-Verfahren verschlüsselten Daten DK. Die Datenstruktur 210 enthält nicht nur die verschlüsselten Daten DK und die Schlüsselkennung KId, sondern auch die zweite Schlüsselkomponente KC.

Im zweiten Gerät 102 werden die verschlüsselten Daten DK empfangen. Aus der mindestens einen empfangenen Datenstruktur 201 ermittelt das zweite Gerät 102 über die Schlüsselkennung KId die zweite Schlüsselkomponente KS. Mit zweiten Schlüsselkomponente KC, die in der Datenstruktur 210 mitgeliefert wurde, wird den Verschlüsselungsschlüssel K, siehe D42, ermittelt. Das zweite Gerät 102 kann damit die verschlüsselten Daten D entschlüsseln.

In Figur 5 ist nun ein erstes Gerät 300 dargestellt. Es umfasst eine Empfangseinheit 301, die den öffentlichen Schlüssel des zweiten Gerätes empfängt. In einer Verschlüsselungseinheit 302 wird bei Bedarf eine vorgegeben Teilmenge der zu übertragenden Daten mit Hilfe des empfangenen öffentlichen Schlüssels pubS des zweiten Gerätes 102 verschlüsselt und von einer Sendeeinheit 303 über die Kommunikationsverbindung 104 zum zweiten Gerät 102 gesendet. pubS Zertifikats

CERT. Diese können beispielsweise in der Verschlüsselungseinheit 302 integriert sein oder als separate Speichereinheit, nicht dargestellt, ausgebildet sein.

Figur 6 zeigt ein zweites Gerät 400. Es umfasst eine Sendeeinheit 401, über die der öffentliche Schlüssel pubkS bei einem Verbindungsaufbau an das erste Gerät 101, 300 gesendet wird. Über eine Empfangseinheit 403 empfängt das zweite Gerät 400 die mindestens eine Datenstruktur 200, 210 und wertet die Schlüsselkennung KId und gegebenenfalls die zweite Schlüsselkomponente KC aus. In einer Entschlüsselungseinheit 402 werden die verschlüsselten Daten DpubkS beziehungsweise DK mit dem ermittelten Verschlüsselungsschlüssel, also entweder dem privaten Schlüssel privkS des zweiten Gerätes 400 oder dem aus der ersten Schlüsselkomponente und der zweiten Schlüsselkomponente generierte Verschlüsselungsschlüssel K.

Das erste Gerät 300 sowie das zweite Gerät 400 kann derart ausgebildet sein, dass die Sendeinheit 301 beziehungsweise 403 und die Sendeinheit 303 beziehungsweise 401 in einer gemeinsamen Sende- und Empfangseinheit ausgebildet sind.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

**Patentansprüche**

1. Verfahren zur verschlüsselten Übertragung von Daten auf einer kryptographisch geschützten, unverschlüsselten Kommunikationsverbindung (104) zwischen einem ersten Gerät (101) und einem zweiten Gerät (102), mit den Schritten:

   - Empfangen eines öffentlichen Schlüssels (pubkS) des zweiten Geräts (102) im ersten Gerät (101) beim Aufbau (M0) der kryptographisch geschützten Kommunikationsverbindung (104), auf der Daten unverschlüsselt übertragen werden,
   - Verschlüsseln mindestens einer Teilmenge der zu übertragenden Daten mit Hilfe des öffentlichen Schlüssels (pubkS) des zweiten Geräts (102) und
   - Senden (M4) der verschlüsselten Teilmenge von Daten an das zweite Gerät (102).

2. Verfahren nach Anspruch 1, wobei der öffentliche Schlüssel (pubkS) als Bestandteil eines digitalen Zertifikats (CERT) des zweiten Geräts (102) im ersten Gerät (101) empfangen wird.

3. Verfahren nach Anspruch 2, wobei als digitales Zertifikat das digitale Zertifikat (CERT) verwendet wird, das bei einer Authentifizierung des zweiten Geräts (102) im ersten Gerät (101) verwendet wurde.

4. Verfahren nach Anspruch 2 oder 3, wobei der öffentliche Schlüssel (pubkS) und/oder das digitale Zertifikat (CERT) des öffentlichen Schlüssels (pubkS) im ersten Gerät (101) gespeichert werden.

5. Verfahren nach Anspruch 2 oder 3, wobei eine eindeutige Kennung, insbesondere ein Hashwert, des öffentlichen Schlüssels (pubkS) oder des digitalen Zertifikats (CERT), im ersten Gerät (101) gespeichert wird.

6. Verfahren nach einem der vorhergehenden Ansprüche, wobei die kryptographisch geschützte Verbindung gemäß einem kryptographischen Sicherheitsprotokoll, insbesondere einem Transportschicht-Sicherheitsprotokoll TLS, einem Datagram Transportschicht-Sicherheitsprotokoll DTLS oder einem sicheren Internet Protokoll IPsec/IKEv2 aufgebaut wird.

7. Verfahren nach einem der vorhergehenden Ansprüche, wobei der öffentliche Schlüssel (pubkS) eine erste Schlüsselkomponente eines kryptographischen Verfahrens mittels elliptischer Kurven ist und mit einer zweiten Schlüsselkomponente (KC) eines kryptographischen Verfahrens mittels elliptischer Kurven, die vom ersten Gerät (101) bereitgestellt wird, zur Berechnung eines Verschlüsselungsschlüssels (K) verwendet wird.

8. Verfahren nach Anspruch 7, wobei die verschlüsselten Daten (DK) zusammen mit der zweiten Schlüsselkomponente (KC) an das zweite Gerät (102) gesendet werden.

9. Verfahren nach einem der vorhergehenden Ansprüche, wobei die mindestens eine Teilmenge der verschlüsselt zu übertragenden Daten in mindestens einer Datenstruktur (300, 400) übertragen wird, die gemäß einer kryptographischen Nachrichtensyntax CMS, einem sicheren Multifunktionalen Internet Mail Erweiterungs-Standards S/MIME oder einem Java Script Objekt Notation Web Verschlüsselungsformats JWE oder einem erweiterbaren Auszeichnungssprache XML Format strukturiert ist.

10. Verfahren nach Anspruch 9, wobei die Datenstruktur eine Schlüsselkennung (KId) aufweist, die den Inhalt der Datenstruktur als verschlüsselte Daten identifiziert.

11. Verfahren nach Anspruch 10, wobei die Schlüsselkennung (KId) den öffentlichen Schlüssel oder mindestens einen Parameter des Zertifikats, insbesondere die Seriennummer und eine Kennung der Ausstellungsstelle des Zertifikats enthält oder eine eindeutige Kennung, insbesondere ein Hashwert des öffentlichen Schlüssels oder des mindestens einen Parameters des Zertifikats, enthält.

12. Erstes Gerät (101, 300) zur verschlüsselten Übertragung von Daten auf einer kryptographisch geschützten, unverschlüsselten Kommunikationsverbindung (103) zwischen dem ersten Gerät (101, 300) und einem zweiten Gerät (102, 400) umfassend:

   - eine Empfangseinheit (301), die derart ausgebildet ist einen öffentlichen Schlüssel (pubkS) des zweiten Geräts (102, 400) beim Aufbau der Kommunikationsverbindung (103), auf der Daten unverschlüsselt übertragen werden, zu empfangen,
   - eine Verschlüsselungseinheit (302), die derart ausgebildet ist mindestens eine Teilmenge der zu übertragenden Daten mit Hilfe des öffentlichen Schlüssels (pubkS) des zweiten Geräts (102, 400) zu verschlüsseln und
   - eine Sendeeinheit (303), die derart ausgebildet ist, die verschlüsselte Teilmenge von Daten an das zweite Gerät (102, 400) zu senden.

13. Erstes Gerät (101, 300) nach Anspruch 12, das derart ausgebildet ist ein Verfahren gemäß Anspruch 1 bis 11 auszuführen.

14. Zweites Gerät (102, 400) zur verschlüsselten Übertragung von Daten über eine kryptographisch geschützte, unverschlüsselte Kommunikationsverbindung (103) zwischen einem ersten Gerät (101, 300) und dem zweiten Gerät (102, 400) umfassend:

   - eine Sendeeinheit (401), die derart ausgebildet ist einen öffentlichen Schlüssel (pubkS) des zweiten Geräts (102, 400) beim Aufbau der Kommunikationsverbindung (103), auf der Daten unverschlüsselt übertragen werden, an ein erstes Gerät (101, 300) zu senden,
   - eine Empfangseinheit (402), die derart ausgebildet ist, eine verschlüsselte Teilmenge von Daten vom ersten Gerät (101, 300) zu empfangen, und
   - eine Entschlüsselungseinheit (403), die derart ausgebildet ist die mindestens eine Teilmenge der empfangenen Daten zu entschlüsseln.

15. Zweites Gerät (102, 400) nach Anspruch 14, das derart ausgebildet ist ein Verfahren gemäß Anspruch 1 bis 11 auszuführen.

16. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 11 durchzuführen.

# FIG 1

# FIG 2A

## FIG 2B

101 103 102

D11

| pubkS=KS | ←CERT(pubkS)── M1 |
| CiPH (int) | M2 | M0 |

M3

D(int)

D41

KC
K=KC*KS

M4

DK(int)

D42

KS
KC
K=KC*KS

M5

D(int)

M6

## FIG 3

200

| DpubkS | Kld |

## FIG 4

210

| DK | KC | KId |
|---|---|---|

## FIG 5

## FIG 6

**Europäisches Patentamt**
**European Patent Office**
**Office européen des brevets**

## EUROPÄISCHER RECHERCHENBERICHT

Nummer der Anmeldung

EP 18 15 6287

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/208045 A1 (HUH MI-SUK [KR] ET AL) 20. Juli 2017 (2017-07-20) * Zusammenfassung; Abbildungen 1,2,19,20 * * Absatz [0038] - Absatz [0053] * * Absatz [0095] - Absatz [0107] * * Absatz [0235] - Absatz [0247] * ----- | 1-16 | INV. H04L29/06 |
| X | DE 10 2010 044518 A1 (SIEMENS AG [DE]) 8. März 2012 (2012-03-08) * Absatz [0017] - Absatz [0030] * * Absatz [0039] - Absatz [0042] * ----- | 1-16 | |
| A | EP 3 226 464 A1 (SIEMENS AG [DE]) 4. Oktober 2017 (2017-10-04) * Absatz [0002] - Absatz [0059] * ----- | 1-16 | |

RECHERCHIERTE SACHGEBIETE (IPC)

H04L

Der vorliegende Recherchenbericht wurde für alle Patentansprüche erstellt

| Recherchenort | Abschlußdatum der Recherche | Prüfer |
|---|---|---|
| München | 18. Mai 2018 | Kraska, Nora |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 15 6287

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-05-2018

| Im Recherchenbericht angeführtes Patentdokument | Datum der Veröffentlichung | Mitglied(er) der Patentfamilie | Datum der Veröffentlichung |
|---|---|---|---|
| US 2017208045 A1 | 20-07-2017 | KR 20160035999 A<br>US 2017208045 A1 | 01-04-2016<br>20-07-2017 |
| DE 102010044518 A1 | 08-03-2012 | CN 103098414 A<br>DE 102010044518 A1<br>EP 2593897 A1<br>US 2013173922 A1<br>WO 2012031820 A1 | 08-05-2013<br>08-03-2012<br>22-05-2013<br>04-07-2013<br>15-03-2012 |
| EP 3226464 A1 | 04-10-2017 | DE 102016205203 A1<br>EP 3226464 A1<br>US 2017288880 A1 | 05-10-2017<br>04-10-2017<br>05-10-2017 |

EPO FORM P0461

Für nähere Einzelheiten zu diesem Anhang : siehe Amtsblatt des Europäischen Patentamts, Nr.12/82